# EUROPEAN PATENT APPLICATION

(11) **EP 1 748 033 A1**
(43) Date of publication of application: **31.01.2007**
(21) Application number: 04734956.8
(22) Date of filing: 26.05.2004
(51) Int. Cl.: C01G 23/00

(54) **NANOSTRUCTURED TITANIUM OXIDE MATERIAL AND METHOD OF OBTAINING SAME**

(30) Priority: 04.05.2004 MX PA04004265
(71) Applicant: Instituto Mexicano Del Petroleo, Deleg. Gustavo A. Madero, México, D.F. 07730 (MX)
(72) Inventor: TOLEDO ANTONIO, J.A., Av. Eje Central Norte Lazaro, Mexico, C. P. 07730 (MX); ANGELES CHAVEZ, C., Av. Eje Central Norte Lázaro, México, C. P. 07730 (MX); CORTES JACOME, M.A., Av. Eje Central Norte Lazaro, Mexico, C. P. 07730 (MX); ALVAREZ RAMIREZ, F., Av. Eje Central Norte Lázaro, Mexico, C. P. 07730 (MX); RUIZ MORALES, Y., Av. Eje Central Norte Lázaro, México, C. P. O7730 (MX); FERRAT TORRES, G., Av. Eje Central Norte Lázaro, México, C. P. 07730 (MX); FLORES ORTIZ, L.F., Av. Eje Central Norte Lazaro, Mexico, C. P. 07730 (MX); LOPEZ SALINAS, E., Av. Eje Central Norte Lázaro, México, C. P. 07730 (MX); LOZADA Y CASSOU, M., Av. Eje Central Norte Lázaro, Mexico, C. P. 07730 (MX)
(74) Representative: Durán Moya, Luis-Alfonso
(86) International application number: PCT/MX2004/000035
(87) International publication number: WO 2005/105674

(57) **Abstract**

The invention relates to nanostructured materials comprising titanium oxide (TiO₂₋ₓ, where 0= x=1), having a hitherto-unknown orthorhombic crystalline structure which is the basic unit in the construction of nanofibres, nanowires, nanorods, nanocoils and/or nanotubes. The materials are produced from an isostructural precursor comprising hydrogen titanate and/or mixed sodium and hydrogen titanate, corresponding to the hydrogenated, protonated, hydrated and/or alkaline phases of the aforementioned structure, and are obtained from titanium compounds, such as: titanium oxide having a crystalline anatase structure, amorphous titanium oxide, titanium oxide having a crystalline rutile structure, and/or directly from rutile mineral and/or ilmenite. The invention also relates to the method of obtaining the inventive materials.

## Description

### INVENTION TECHNICAL FIELD

The present invention is related with nanostructured materials of titanium oxide (TiO₂₋ₓ, where 0≤ x ≤1), which have as a building block a crystalline structure with an orthorhombic symmetry that was unknown until now. The new crystalline structure is the basic unit of construction of nanostructured materials which are nanofibers, nanowires, nanorods, nanoscrolls and/or nanotubes. These nanostructured materials are obtained from a precursor that is isostructural to the new crystalline structure. The precursor is composed of hydrogen titanate and/or a mixed sodium and hydrogen titanate. These titanates are the hydrogenated, protonated, hydrated and/or the alkalinized phases of the new crystalline structure. In addition this invention is also related to the procedure of synthesis of the nanostructured materials.

The materials objects of the present invention are used mainly as catalysts, as support for catalysts, as photocatalysts, as adsorbents, as semiconductors in the construction of electronic devices, in photoelectric cells, in pigments and in cosmetics.

### INVENTION BACKGROUND

Nowadays, researchers in the catalysis and materials fields have focused considerable efforts on the design of new porous materials, either synthetic or natural with enhanced textural properties, through innovating synthesis procedures as the molecular molding. Generally the porous structure of such solids is formed during its crystallization or during further treatments.

The porous materials are classified, depending on their predominating pore size, in: 1) microporous, with pore sizes <1.0 nm; 2) mesoporous, with pore sizes between 1.0 and 50.0 nm and 3) macroporous, with pore sizes surpassing 50.0 nm. From all of them, the macroporous solids have a limited use as adsorbers or catalysts due to the fact that they generally present a low surface area and their big pores are not uniform. On the other hand, the microporous and mesoporous solids are widely used in the technologies of adsorption, of separation and of catalysis, particularly in the processing and refining of oil. For such applications, nowadays, there is an increase in the demand of new materials with a well defined and homogeneous porous distribution, thermically stable, with a high specific area and big pore volumes; in order to make more efficient the physical and/or chemical processes where these materials are used.

The porous materials can have an amorphous or nanocrystalline structure. The amorphous materials, such as silica gel or alumina gel, do not have any crystallographic order, while nanocrystalline solids such as transition alumina, gamma or eta, present a partially ordered structured. Generally, these two kinds of materials display a very wide pore distribution, which limits the effectiveness of catalysts, adsorbers and/or ionic exchange systems prepared from these materials. The wide pore distribution limits mainly the use of these materials in oil refining processes.

Zeolites and the molecular sieves are a clear example of uniformity in the pore sizes that have to be rigorously established. However, the pore size distribution is limited to the microporous region, due to the fact that the pores are formed from the cavities and /or channels that form the structure itself; therefore, molecules of big dimensions cannot be processed in this type of materials. On the other hand, these materials are generally synthesized under hydrothermal conditions in the presence of an agent that engineers the structure.

The need to expand the uniformity and the homogeneity of the pore sizes from the microporous region to the mesoporous region, thus allowing the adsorption and processing of bigger molecules, has led to the search of new organic agents capable of engineering new structures. This has given origin to molecular sieves with bigger pore size as the aluminophosphates, galliophosphates, etc. (Nature, vol. 352, 320-323 (1991); J. Chem. Soc. Chem. Commun., 875-876 (1991)). However, these structures are thermically not very stable.

With the discovery of the mesoporous silicates and aluminosilicates in 1992 (American patents US 5,098,684 and 5,102,643), a new stage in the development of ordered mesoporous materials started. This type of materials, called M41S, have a uniform pore size, which is adjustable to an interval between 1.3 and 10.0 nm. Such materials display a pore wall with a thickness between 0.8 and 1.2 nm and a crystal size over 50.0 nm. On the other hand, depending on the general conditions of synthesis, in particular on the concentration of the structure engineering agent, the M41 S materials can have an hexagonal morphology (MCM-41), a cubic morphology (MCM-48), or a laminar structure (J. Am, Chem. Soc., vol. 114, 834-843 (1992)); this implies a formation mechanism based on strong electrostatic interactions and /or the ionic pairing between the oligomer silicate precursor and the structure engineering agent, making the removal of the later difficult.

The discovery of the carbon fullerene structure (C₆₀) during the 80s, which consists of a hollow sphere whose wall is made up of sixty carbon atoms (Nature, vol. 318, 162-163 (1985)), led to a new materials era of great discoveries as, for example, the carbon nanotubes (Nature, vol. 354, 56-58 (1991)). These structures and /or the nanotubular morphologies present interesting physical and chemical properties, making them suitable for the construction of nanoelectronic innovating devices, among other applications. Due to this, the synthesis of nanostructured materials of carbon and inorganic materials has boomed in the past few years. In 1992 the first nanotubes and/or structures fullerene type of MoS₂ and WS₂ (Nature, vol. 360, 444-446 (1992)), were obtained. Since then a great variety of nanomaterials includes: inorganic oxides such as: VO₂, ZrO₂, TiO₂, SiO₂, Al₂O₃, ZnO and TeO₂, sulphides, selenides, telurides, nitrates and transition metal carbides; among others (Dalton Trans., 1-24 (2003)).

On the other hand, a series of studies in confined fluids (M. Lozada- Cassou et al. J.Chem. Phys., vol. 80, 3344-3349 (1984); J. Chem. Phys., vol. 92, 1194-1210 (1990); J. Chem. Phys., vol. 98, 1436-1450 (1993); Mol. Phys., vol. 86, 759-768 (1995); Phys., Rev. E., vol. 53, 522-539 (1996); Phys. Rev. Letts., vol. 77, 4019-4022 (1996); Phys. Rev. E., vol. 56, 2958-2965 (1997); Phys. Rev. Letts., vol. 79, 3656-3659 (1997)), showed that the confinement and curvature at nano-scale produces electric fields and molecular strengths of outstanding intensity. These studies show, for example, that in nano-confinement a separation of charge in the ionic fluid can occur (Phys. Rev. Letts., vol. 79 656-659 (1997)), which implies confinement pressures in the order of 1,250 atm and intermolecular repulsion forces of 5 x 10⁻⁹ N. This result highlights the importance of the confinement for the molecular separation and it oriented the present invention towards the search of tubular structures at nanometric scale and to the development of new materials with enhanced catalytic properties, semiconductive properties, etc.

The nanotubes are materials that are applied, for example, in processes involving adsorption phenomena, as they increase the contact area by exposing the internal surface, the external surface, the surface in the vertex and the surface in the interlayer regions that compose the walls. This together with the increase of the intensity in the force fields, due to curvature and confinement of the nanotubes, enhance the catalytic activity of catalysts or of active phase materials supported on nanotubes. According to the porous materials classification, the nanotubes present mesopores which are homogeneous with a size between 1 to 50 nm and with a high pore volume. These characteristics make the nanotubes potentially useful as catalytic supports or as catalysts.

In the past it has been possible to synthesize nanotubes with walls composed of zirconium oxide, alumina, titania with anatase structure, and transition metal sulfides among others, by means of methods involving the addition of a structure engineering agent, consisting of a cationic, anionic and/or neutral tensoactive agent. However, the tensoactive elimination through calcinations, leads in most cases to the collapse of the nanotubular structure.

Other procedures in the nanotubes synthesis consist in the application of porous membranes, organic or inorganic, to guide the nanotube formation; however, they are generally applied for the case of materials whose structure is compact or tridimensional (3D). The materials with bidimensional structures (2D), like plates and/or sheets, can form unidimensional materials (1D) of the nanotube type and /or nanofibers, by the direct bending and /or rolling of its structure, due to temperature effect, to pressure or to the application of an electric potential, etc.

Titanium oxide is commonly presented as a tridimensional structure material (3D) and it is basically used as a semiconductor material in the construction of electronic and optoelectronic devices, in the manufacturing of pigments and coatings, as catalyst and/or catalyst support in several processes, as photocatalyst in the degradation of organic compounds during environmental protection processes, as photosensitive material in the construction of fuel cells and solar cells, etc.

Titanium oxide is a material that presents several structural phases. The crystalline varieties that are most common are: anatase, rutile and brookite. Each phase presents different properties and among them anatase is the one that has most applications, due to the fact that it can be obtained easily through a conventional chloride or sulfide process.

On the other hand, nanotubes and / or titanium oxide nanofibers with the anatase structure have been obtained, improving in this way the textural properties of the titanium oxide. In this direction the WO03037798 international patent, published on May 8^{th} 2003, describes a procedure to obtain tubular TiO₂ particles with the anatase structure, with an external diameter of 5 to 40 nm, with lengths of 50 to 1,000 nm and specific areas between 400 and 450 m²/g; whose synthesis requires two stages of hydrothermal treatment which involves an alkaline metal and an organic alkaline base. The inventors apply such tubular particles as photocatalysts and/or materials for the construction of photoelectric cells showing good results.

The American patent US 6,537,517, published on March 21st 2003, refers to a process for titanium oxide production with tubular morphology and anatase structure, with or without the presence of silicon oxide, by means of a hydrothermic treatment involving an alkaline metal hydroxide. The TiO₂ nanotubes with anatase structure present specific areas between 200 and 500 m²/g.

The present invention displays considerable differences regarding to the obtained results in the aforementioned patents. The present invention is related with nanostructured materials of titanium oxide (TiO₂₋ₓ, where 0≤x ≤1), which have as a building block a crystalline structure with an orthorhombic symmetry that was unknown until now. The new crystalline structure is the basic unit of construction of nanostructured materials which are nanofibers, nanowires, nanorods, nanoscrolls and/or nanotubes. The nanostructured materials are obtained from a precursor that is isostructural to the new crystalline structure. The precursor is a hydrogen titanate and/or a mixed sodium and hydrogen titanate. These titanates are the hydrogenated, protonated, hydrated and/or the alkalinized phases of the new crystalline structure. In this invention we name the new crystalline structure with orthorhombic symmetry as the JT phase of the TiO₂₋ₓ new material, where 0≤ X ≤1.

Also this invention is related to the procedure of synthesis of the nanostructured materials, which have as building block the new JT phase. The new nanostructured materials after being submitted to a stage of thermal treatment in an inert, oxidizing or reducing atmosphere; preserve intact their nanotubular structure with no collapse, thus keeping their fibrilar morphology and high specific area.

The materials aim of the present invention are used mainly as support for catalysts and/or as catalysts, as photocatalysts, as adsorbents, as semiconductors in the construction of electronic devices, in photoelectric cells, in pigments and cosmetics, among other applications.

### SPECIFICATION OF THE INVENTION

The present invention is related with nanostructured materials of titanium oxide (TiO₂₋ₓ, where 0≤ x ≤1), which have as building block a crystalline structure with an orthorhombic symmetry that was unknown until now. The new crystalline structure is the basic unit of construction of nanostructured materials which are nanofibers, nanowires, nanorods, nanoscrolls and/or nanotubes. The nanostructured materials are obtained from a precursor that is isostructural to the new crystalline structure. The precursor is a hydrogen titanate and/or a mixed sodium and hydrogen titanate. These titanates are the hydrogenated, protonated, hydrated and/or the alkalinized phases of the new crystalline structure.

Also this invention is related to the procedure of synthesis of the nanostructured materials, which involves among other stages: an alkaline treatment of the starting materials followed by a thermal treatment under either reflux conditions or hydrothermal treatment at atmospheric pressure, controlled or autogenous; then a treatment of ionic exchange is carried out, which can be done in alcoholic and/or aqueous media with different levels of acidity, to thus obtaining the hydrogen titanates or the mixed sodium and hydrogen titanates. Finally, the titanates are submitted to a stage of thermal treatment in an inert, oxidizing or reductive atmosphere; to produce a material with an orthorhombic structure, denominated by the inventors as the JT phase of the TiO₂₋ₓ, where 0≤ x ≤1.

The materials are used mainly as supports for catalysts and/or as catalysts, as photocatalysts, as adsorbents, as semiconductors in the construction of electronic devices, in batteries, in photoelectric cells, in pigments and in cosmetics.

Thus, one of the aims of the present invention is to provide nanostructured materials of titanium oxide (TiO₂₋ₓ, where 0≤ x ≤1), which have a crystalline structure not known until now, whose unit cell presents an orthorhombic array and that is the basic unit of construction of nanofibers, nanowires, nanorods, nanoscrolls and/or nanotubes.

Another aim of the present invention is to provide a procedure to synthesize the nanostructures and/or nanoparticles with the structure TiO₂₋ₓ JT phase, where 0≤ x ≤1, which was unknown until now, and that presents a fibrilar morphology and/or a tubular morphology depending on the general conditions during the synthesis procedure.

One more aim of the present invention is to provide nanostructured materials of titanium oxide (TiO₂₋ₓ, where 0≤ x ≤1), which have a crystalline structure not known until now, and that are obtained from an isostructural precursor composed of hydrogen titanate and/or a mixed sodium and hydrogen titanate which correspond to the hydrogenated, protonated, hydrated and/or the alkalinized phases of the new crystalline structure.

One more aim of the present invention is to provide nanostructured materials of titanium oxide (TiO₂₋ₓ, where 0≤ x ≤1), which have a crystalline structure not known until now, and that present a fibrilar morphology or nanotubular morphology obtained by a process which comprises an stage of thermal treatment in a controlled atmosphere composed of air, O₂, N₂, H₂, He, Ar or a mixture of them at any concentration in a dynamic or a static regime; and at a temperature between 200 and 1000 °C, preferably between 300 and 700 °C; and starting from an isostructural precursor composed of hydrogen titanate and/or a mixed sodium and hydrogen titanate.

One more aim of the present invention is to provide nanostructured materials of titanium oxide (TiO₂₋ₓ, where 0≤x ≤1), which have a crystalline structure not known until now, and that present a fibrilar morphology or nanotubular morphology and that are mainly used as supports for catalysts and/or as catalysts, as photocatalysts, as adsorbents, as semiconductors in the construction of electronic devices, in batteries, in photoelectric cells, in pigments and in cosmetics.

### BRIEF DESCRIPTION OF THE FIGURES IN THE INVENTION.

With the objective of obtaining a major understanding of the crystalline structure, which is the building block of the nanostructured materials of titanium oxide of the present invention, called TiO₂₋ₓ JT phase; where x varies between 0 and 1 due to the fact that this crystalline structure presents a high oxygen deficiency, in the following text we will make reference to the figures that are attached to the present invention.

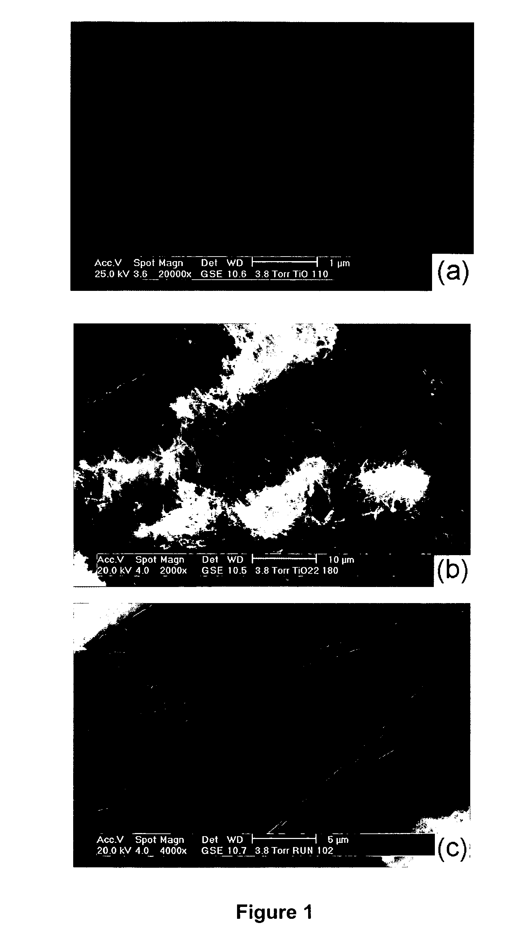

Figure 1 shows scanning electron microscopy images (SEM) where it is observed the nanofibrilar and/or nanotubular morphology of the hydrogen titanate, of the mixed sodium and hydrogen titanate and of the TiO₂₋ₓ JT phase, where 0≤ x ≤1:
   (a) Nanofibers and/or nanotubes obtained at low temperature, from 50 to 130 °C,
   (b) Nanofibers and/or nanotubes obtained at medium temperature, from 130 to 160°C and
   (c) Nanofibers and/or nanotubes of TiO₂₋ₓ JT phase, where 0≤ x ≤1, obtained after submitting to a thermal treatment the hydrogen titanates, or the mixed sodium and hydrogen titanates synthesis at high temperature, between 160 and 250 °C.

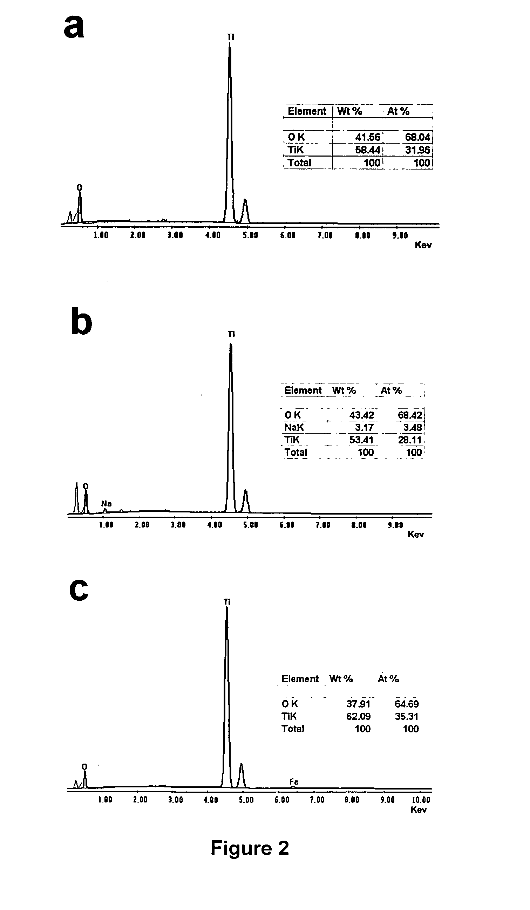

In Figure 2 X-ray spectroscopy microanalysis (EDX) spectra are presented. This spectra show the quantitative chemical composition of the nanotubes and/or nanofibers, which are objects of the present invention: a) hydrogen titanate, b) mixed sodium and hydrogen titanate and c) TiO₂₋ₓ JT phase, where 0≤x ≤1.

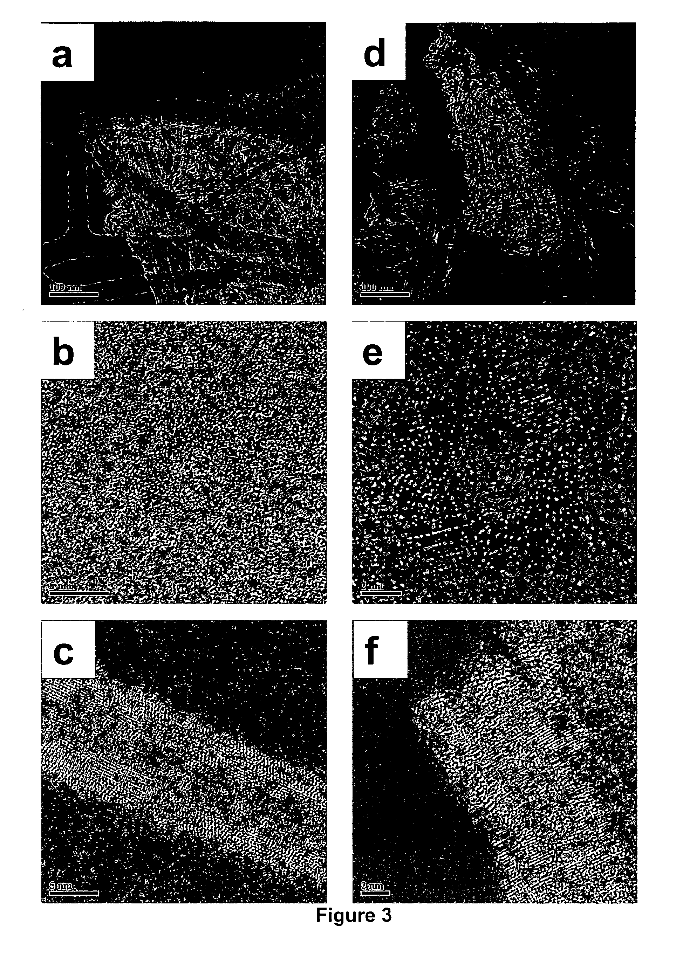

In Figure 3 the transmission electron microscopy (TEM) images are shown where: (a), (b) and (c) correspond to nanotubes of hydrogen titanates and mixed sodium and hydrogen titanates and (d), (e), and (f) correspond to nanotubes of TiO₂₋ₓ JT phase, where 0≤ x ≤1. Throughout the text Figure 3 is used as an illustrative example of the typical transmission electron microscopy images obtained for our hydrogen titanate and/or mixed sodium and hydrogen titanate and our TiO₂₋ₓ JT phase, where 0≤x ≤1. While the intensity of the picks can change its position do not.

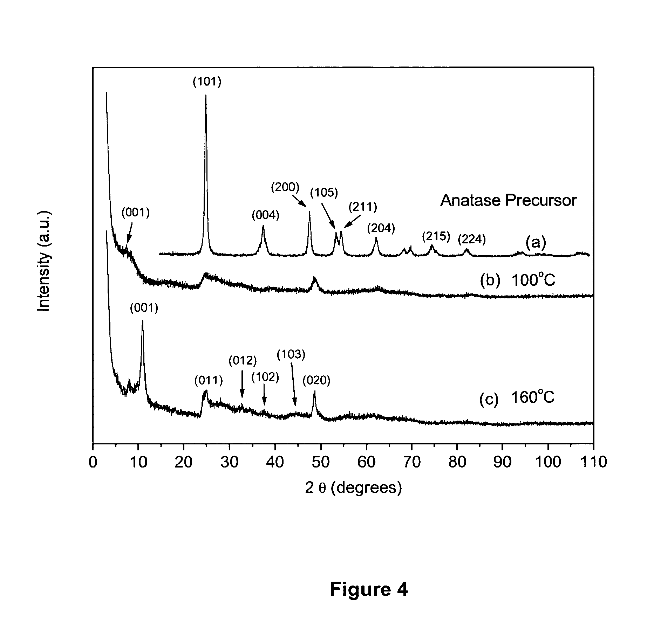

In Figure 4 the X-ray diffraction patterns are shown: (a) titanium compound, meaning TiO2 with anatase structure or phase; (b) and (c) hydrogen titanates and mixed sodium and hydrogen titanates synthesized at 100 °C (b) and at 160 °C (c), respectively; which are precursors of the TiO₂₋ₓ JT phase, where 0≤ x ≤1. Throughout the text Figure 4 is used as an illustrative example of the typical X-ray diffraction patternes obtained for form our hydrogen titanate and/or mixed sodium and hydrogen titanate. While the intensity of the picks can change its position do not.

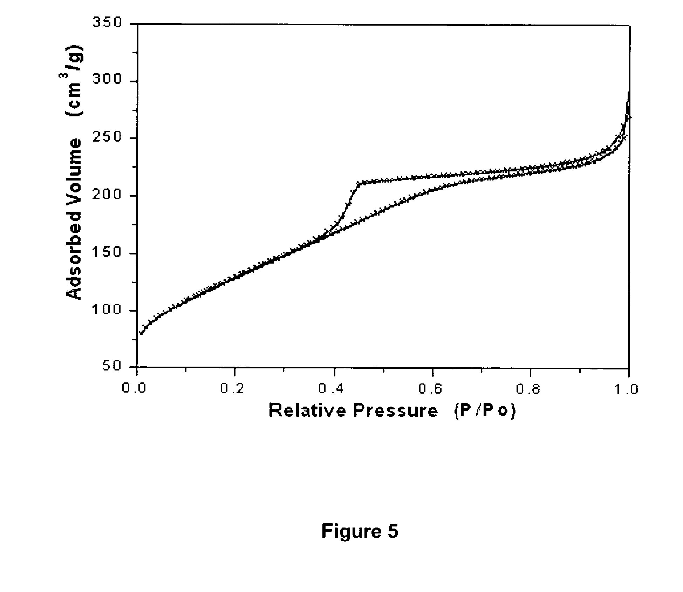

Figure 5 shows the characteristic nitrogen adsorption isotherm obtained for the hydrogen titanate nanostructures, for the mixed sodium and hydrogen titanate and for the TiO₂₋ₓ JT phase, where 0≤ x ≤1.

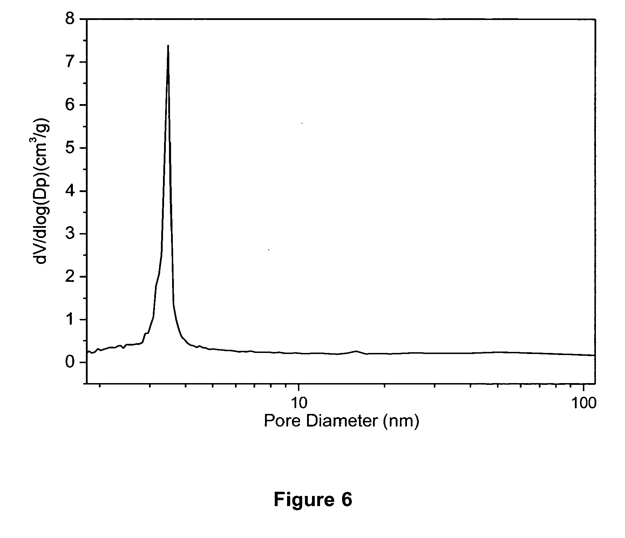

Figure 6 shows the characteristic pores distribution of the hydrogen titanate nanostructures, of the mixed sodium and hydrogen titanate and of the TiO₂₋ₓ JT phase, where 0≤x ≤1.

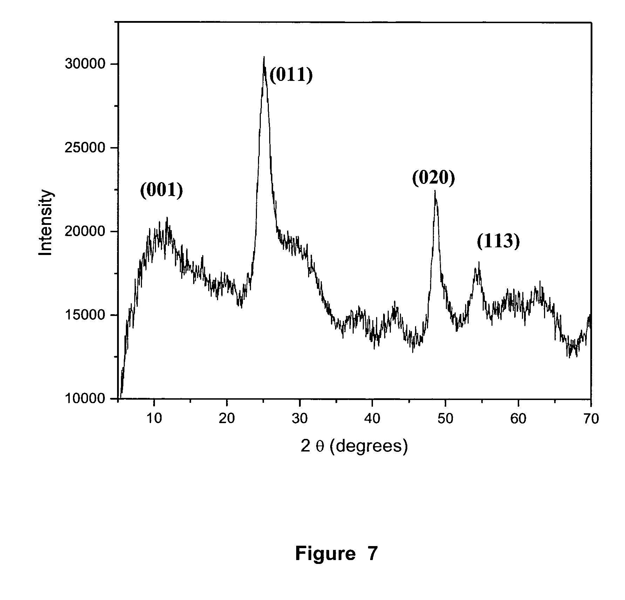

Figure 7 shows the X-ray diffraction pattern of the TiO₂₋ₓ JT phase, where 0≤ x ≤1, which is object of the present invention.

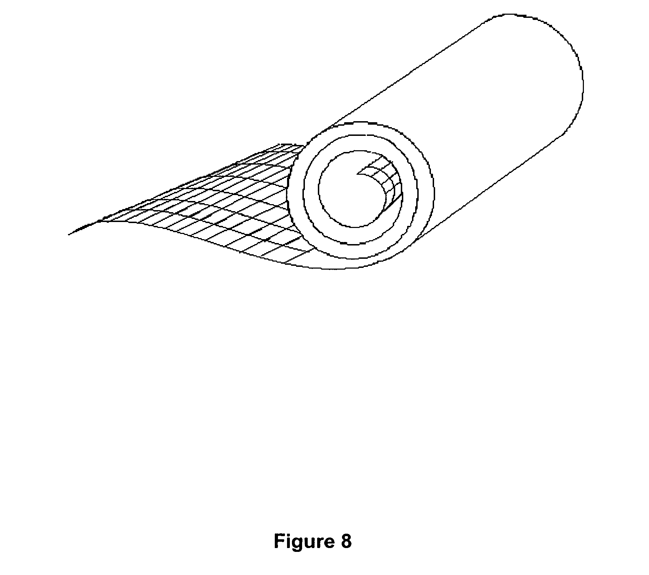

Figure 8 shows the model of the formation of the tubular structures starting from an inwards rolled layer and/or sheet.

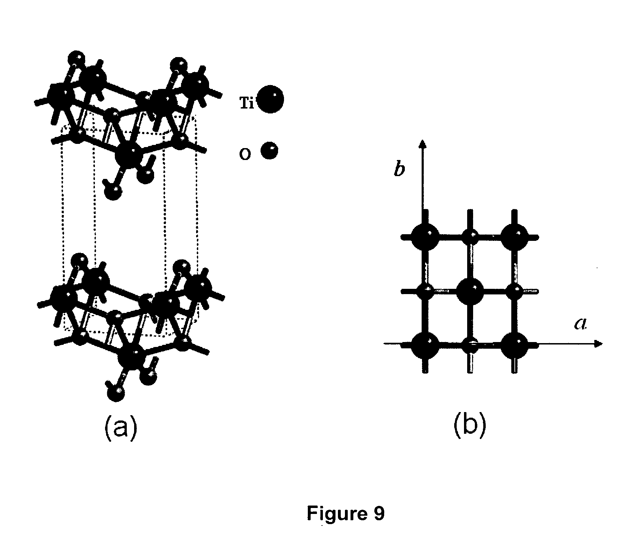

In Figure 9 the basic structural crystalline cell or unit of the TiO₂₋ₓ JT phase, where 0≤ x ≤1 is presented. The crystalline unit has an orthorhombic symmetry and it is the building block of the nanostructured materials, which are obtained from the synthesis procedure outlined in the present invention. In Figure 9(a) a three-dimensional (3D) view of the unit cell is shown. In Figure 9(b) a bi-dimensional (2D) view of the unit cell in the **(*a, b*)** crystalline plane is shown.

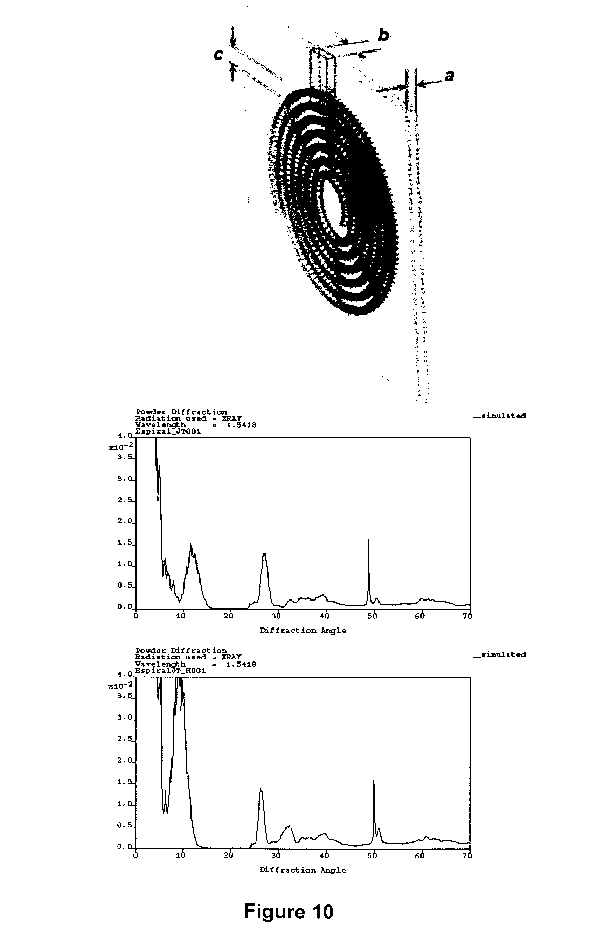

In Figure 10 it is illustrate schematically: (a) the cell parameters of the unit cell of the TiO₂₋ₓ JT phase, where 0≤ x ≤1 with tubular structure which is obtained from the synthesis procedure outlined in the present invention; (b) and (c) present the X-ray diffraction patterns simulated for the model presented in the Figure 10(a) and for the structures shown in the Tables 2 and 10 of the hydrogen titanate and of the mixed sodium and hydrogen titanate and of TiO₂₋ₓ JT phase, where 0≤ x ≤1.

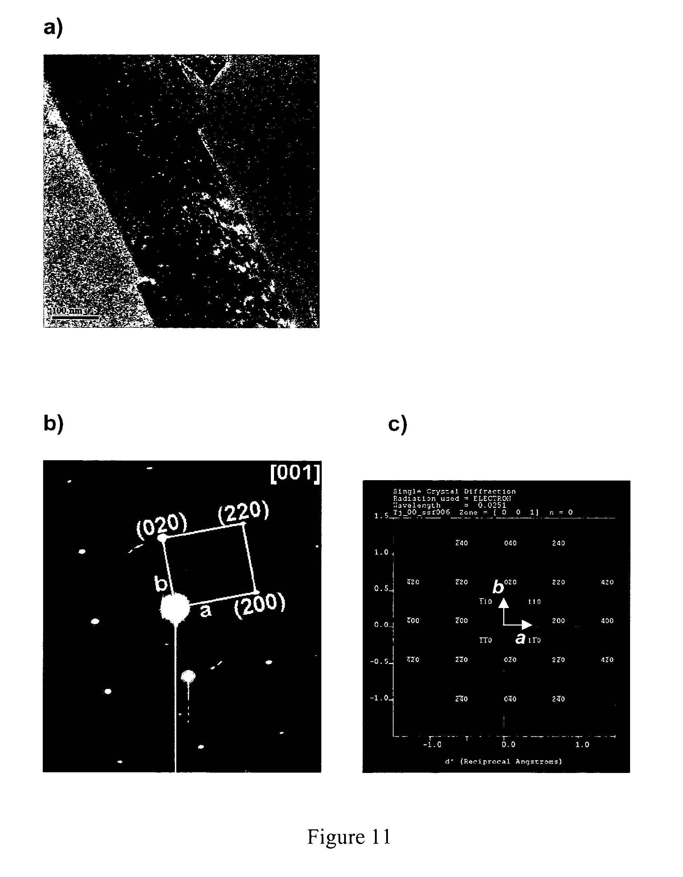

Figure 11 shows the following images: (a) transmission electron microscopy (TEM) image, which presents the morphology of the nanotubes of TiO₂₋ₓ JT phase, where 0≤ x ≤1; (b) experimental electron diffraction pattern of the nanotube or nanofiber presented in Figure 11 a and where the reflections (200) and (020) associated with cell parameters ***a*** and ***b*** respectively are shown.

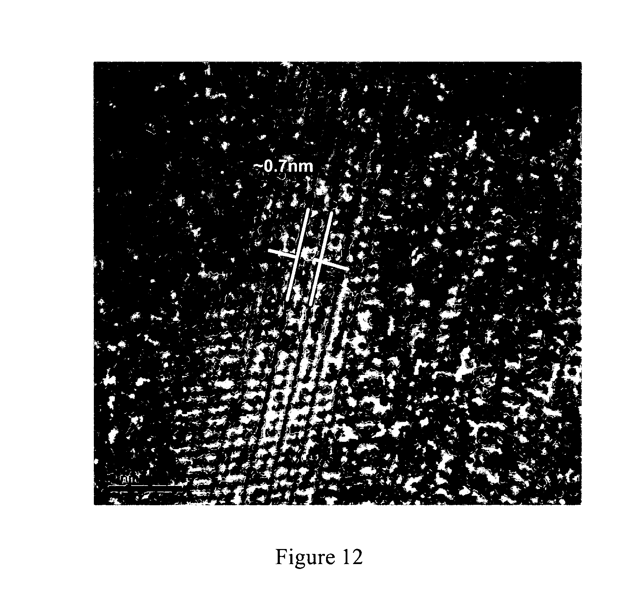

Figure 12 shows a high resolution transmission electron microscopy (HRTEM) of a fiber and/or tube where an inter-planar spacing of approximately 0.7 nm is observed and it is associated with the c cell parameter of the orthorhombic unit cell of the TiO₂₋ₓ JT phase, where 0≤ x ≤1.

### DETAILED DESCRIPTION OF THE INVENTION

The present invention is related with nanostructured materials of titanium oxide which have as a building block a crystalline structure with an orthorhombic symmetry that was unknown until now and that the authors named as JT phase of the TiO₂₋ₓ, where 0≤ x ≤1.n The new crystalline structure is the basic unit of construction of nanostructured materials which are nanofibers, nanowires, nanorods, nanoscrolls and/or nanotubes. The nanostructured materials are obtained from a precursor that is isostructural to the new crystalline structure. The precursor is a hydrogen titanate and/or a mixed sodium and hydrogen titanate. These titanates are the hydrogenated, protonated, hydrated and/or the alkalinized phases of the new crystalline phase JT. In the structure of the TiO₂₋ₓ JT phase, x can vary form 0 to 1 due to the fact that the structure has an oxygen deficiency, which makes it a useful material for applications that involve surface adsorption phenomenon, among other applications.

Likewise, this invention is related with the procedure of synthesis of the nanostructured materials, which involves among other stages: an alkaline treatment of the starting materials followed by a thermal treatment under either reflux conditions or hydrothermal treatment at atmospheric pressure, controlled or autogenous; then a treatment of ionic exchange is carried out, which can be done in alcoholic and/or aqueous media with different levels of acidity, to thus obtaining the hydrogen titanates or the mixed titanates of hydrogen and sodium. Finally, the titanates are submitted to a stage of thermal treatment in an inert, oxidizing or reductive atmosphere to producing a material with an orthorhombic structure, denominated by the inventors as the JT phase of the TiO₂₋ₓ, where 0≤ x ≤1.

These materials, according to the present invention, are used mainly as supports for catalysts and/or as catalysts, as photocatalysts, as adsorbents, as semiconductors in the construction of electronic devices, in photoelectric cells, in pigments and in cosmetics.

The cell parameters of the unit cell of the TiO₂₋ₓ JT, where 0≤ X ≤1, are reported in Table 10 and they vary between the following intervals: "***a***" from 0.283 to 0.324 nm, "***b***" from 0.354 to 0.395 nm and *"**c**"* from 0.695 to 1.453 nm; with α=β=γ=90°. The cell parameters depend on the general synthesis conditions of the hydrogen titanates and/or the mixed sodium and hydrogen titanates and on the conditions during the thermal treatment of them, under a controlled atmosphere and a temperature in the range of 300 and 700°C.

In the present invention the unit cell of TiO₂₋ₓ JT, where 0≤ X ≤1, (Figure 9a and 9b) represents the basic unit of construction of the plates and/or sheets that compose the nanotubes, nanofibers, nonowires, nanorods and/or nanoscrolls (Figures 8 and 10).

The nanostructures and/or nanoparticles with the TiO₂₋ₓ JT structure, where 0≤X ≤1, present a nanofibrilar morphology and/or a nanotubular morphology, which is constituted by piled structural layers that are rolled inwards (Figure 8). These layers present a great deficiency of oxygen and their basic structural unit (Figure 9 (a) and (b)) consist of two oxygen atoms per one of titanium in a basic cell that repeats thus forming the piled sheets that compose the nanotubes, nanofibers, nonowires, nanorods and/or nanoscrolls by rolling inwards into themselves. The unit cell of the structure TiO_{2-X} JT, where 0≤ X ≤1, presents an orthorhombic symmetry, which is describe by several spatial groups defined in the "International Tables for Crystallography" The atomic coordinates are presented in Table 10.

The cell parameters of the structure called in this invention as JT were determined experimentally by characterization techniques such as: the transmission electron microscopy (TEM). The electron diffraction patterns of isolated nonofibers, see Figure 11(a), were used to obtain the ***a*** and ***b*** cell parameters. The c parameter of the unit cell was obtained with high resolution transmission electron microscopy (HRTEM). An HRTEM image is presented in Figure 12. The experimental results agree with the same results obtained by theoretical simulation. For example, in Figure 11(c) it is shown the theoretically calculated electron diffraction pattern for the theoretical model of the JT phase, with orthorhombic structure, that is presented in Figure 9(a) and (b). The calculated electron diffraction pattern (see Figure 11c) agrees with the experimental one presented in Figure 11b.

The nanostructures and/or nanoparticles with the TiO_{2-X} JT structure, where 0≤ X ≤1, present the following characteristics: a pore diameter of 3 to 50 nm, 10 to 1,000 nm in length and an specific area of 5 to 500 m²/g, preferably 100 to 400 m²/g.

The hydrogen titanate or titanium oxide hydrated and/or the mixed sodium and hydrogen titanate, with the general formula HTiO₂ and Na_{X}H_{1-X}TiO₂, where 0≤X≤1; which are also aims of the present invention, have a structure with an orthorhombic symmetry similar to the structure TiO_{2-X} JT structure, where 0≤X ≤1. The structure of these titanates is describe by several spatial arrays of the "International Tables for Crystallography" and their relative atomic coordinates are presented in Table 2, which correspond to the hydrogenated, hydrated, protonated and/or alkalinized phases.

The relative atomic coordinates vary depending on both the concentration of the alkaline metal in the mixed sodium and hydrogen titanate, and on the crystalline array; which in turn depend on the general synthesis conditions. The cell parameters of the unit cell of the orthorhombic structure that conforms the nanotubes and/or nanofibers of the hydrogen titanates and/or the mixed sodium and hydrogen titanate, vary within the following interval: "a" from 0.29 to 0.32 nm; "b" from 0.35 to 0.43 nm and "c" from 0'.882 to 1.885 nm; with α=β=γ=90°.

Likewise, this invention is related with the procedure of synthesis of the titanate materials, which involves an alkaline treatment of the starting materials followed by a thermal treatment under either reflux conditions or hydrothermal treatment at atmospheric pressure, controlled or autogenous (in an interval of 1 to 150 atm), to thus obtain the hydrogen titanate and/or the mixed sodium and hydrogen titanate. Finally, the titanates are submitted to a stage of thermal treatment in a controlled atmosphere composed of air, O₂, N₂, H₂, He, Ar or a mixture of them at any concentration in a dynamic or a static regime, preferably in a dynamic atmosphere of air and nitrogen; at a temperature in the range of 200 and 1000 °C, preferably between 300 and 700 °C; to thus obtain the titanium oxide material with the structure (JT), which is an aim or an object of the present invention.

The procedure to obtain nanostructures such as nanofibers, nanowires, nanorods, nanoscrolls and/or nanotubes of TiO₂₋ₓ JT phase, where 0≤ x ≤1, with high specific area, in an interval of 5 to 500m²/g; consist first in the treatment of a titanium compound such as: titanium oxide with a crystalline structure anatase type, amorphous titanium oxyhydroxide and/or amorphous titanium hydroxide, titanium oxide with a crystalline structure rutile type and/or directly from the mineral called rutile and/or ilmenite; with an alkaline solution in a concentration inside the range of 1 to 50 M, preferably of 5 to 20 M, of sodium hydroxide or sodium carbonate, potassium hydroxide or ammonium hydroxide; preferably of sodium hydroxide or potassium hydroxide.

One way in the procedure of the present invention consist in submitting the former suspension to a treatment under hydrothermal conditions in a closed system with or without stirring at 250 rpm; at a temperature in the range of 50 to 300°C, preferably between 80 and 250°C; under autogenous pressure in a range of 1 to 150 atm; during a time range of 1 to 170 h, preferably of 1 to 80 h.

Another way in the procedure of the present invention consist in submitting the first formed suspension to a thermal treatment under atmospheric pressure and in reflux conditions; with or without stirring at 100 rpm; at a temperature in the range of 50 to 150°C, preferably in the range of 80 to 120°C; during a period of time in the range of 1 to 100 h, preferably in the range of 1 to 80 h.

Each of the materials that originate from the two preferred ways in the synthesis aforementioned, are submitted to a treatment of ionic exchange with a diluted acid solution with a concentration in the range of 0.1 and 1 M in aqueous media and/or alcoholic media, and using acids such as the following: chlorhidric acid, sulfuric acid, nitric acid, fluoric acid, boric acid and/or phosphoric acid, or ammonium chloride, ammonium carbonate, or any ammonium salt capable of exchanging sodium; preferably a solution of chloridric acid or nitric acid; till the pH of the suspension lowers to a value between 1 and 7, preferably 2 and 4. Then, the suspension is aged for an interval of time between 1 to 24 h, preferably 3 to 18 h; at room temperature, approximately 20°C. Once the aging process is finished, the suspension is separated by a filtration procedure; the obtained solid is washed with sufficient deionized water and it is dried in a stove with a temperature in the range of 60 to 120°C, preferably between 80 and 110°C, during a time period of 4 to 24 h, preferably 12 to 18 h.

The ionic exchange treatments are done directly by several successive washings with water or with alcohol (ethanol, *n*-propanol, *i*-propanol, *n*-butanol, etc) or with mixtures of alcohol-water in any proportion. Depending on the extent of the washing and/or the decrease on the pH of the suspension, the hydrogen titanates and/or the mixed sodium and hydrogen titanates, which are aims of the present invention, are produced.

The hydrogen titanates and/or the mixed sodium and hydrogen titanates, which are the precursors of the TiO₂₋ₓ JT phase, where 0≤x ≤1, and aims of the present invention, present: disordered mesoporousity, average pore diameter in the range of 3 to 15 nm, and a specific area in the range of 100 to 600m²/g.

The specific area of the hydrogen titanates and/or the mixed sodium and hydrogen titanates, depend on: their radial and longitudinal dimensions; the general synthesis conditions during the hydrothermal treatment or the thermal treatment under reflux conditions; and on the prevailing conditions during the ionic exchange treatment.

With the same titanium compound, such as the TiO₂ with anatase structure, and at constant hydrothermal reaction time and in a closed system, the synthesis carried out at reaction temperatures lower than 150°C (with a concentrated solution of an alkaline metal hydroxide and/or an alkaline metal carbonate in the range of 1 to 50 M, preferably from 5 to 20M) produces small nanofibers and/ or nanotubes with a piling level of 1 to 10 layers. The longitude of the nanofibers and/or nanotubes vary between 0.1 and 1 µm. Whereas the synthesis carried out at a temperature between 150 and 300°C produce nanofibers and/or nanotubes of higher dimensions, with piling levels between 10 to 50 layers and a length between 1 and 50 µm.

Another parameter ruling the nanofiber and /or nanotubes growth of the hydrogen titanates and/or the mixed sodium and hydrogen titanates, which are the precursors of the TiO₂₋ₓ JT phase, where 0≤ x ≤1, and that are aims of the present invention, is the size of the aggregates and crystallites of the starting material in the synthesis of the titanates. At a same reaction temperature and at same reaction timing for the hydrothermal reaction and or thermal reaction under reflux conditions, big crystalline aggregates of the starting material produce nanofibers and/or nanotubes of small dimensions, with piling levels of 1 to 10 structural layers and a length between 0.1 and 5 µm, while a titanium starting material with small crystalline aggregates and/or with a small crystal size, between 5 and 10 nm, produces big nanofibers and/or nanotubes of hydrogen titanate and/or mixed sodium and hydrogen titanates with lengths ranging from 1 to 10 µm.

Another parameter ruling the growth of the nanofibers and/or nanotubes of the hydrogen titanates and/or the mixed sodium and hydrogen titanates, which are the precursors of the TiO₂₋ₓ JT phase, where 0≤ x ≤1, and that are aims of the present invention, is the time of the thermal reaction at reflux or hydrothermal conditions. Using the same raw starting material, a reaction time lower to 6 h produces small nanofibers and/or nanotubes with a length between 50 to 500 nm, with piling levels from 2 to 5 layers, while a reaction time between 7 and 72 h produces a nanofibers and/or nanotubes growth of 0.1 to 10 µm in length.

The control of dimensions of the hydrogen titanate and/or the mixed sodium and hydrogen titanate is important, due to the fact that they rule the dimensions of the TiO₂₋ₓ JT phase, where 0≤ x ≤1, aim of the present invention.

The hydrogen titanates and/or the mixed sodium and hydrogen titanates synthesized are thermally treated in an oxidizing, or reductive or inert controlled atmosphere (air, O₂, N₂, H_{2,}, He, Ar, or a mixture of them in any concentration), preferably in an oxidizing or inert atmosphere such as air or nitrogen; in a dynamic or static regime, preferably dynamic; at a temperature between 200 and 1,000°C, preferably between 300 and 700°C; to obtain the TiO₂₋ₓ JT phase, where 0≤ x ≤1, which keeps the nanotubular morphology and / or nanofibrilar morphology of the precursor.

After the thermal treatment, under controlled atmosphere, the hydrogen titanate and/or the mixed sodium and hydrogen titanate is converted into the TiO₂₋ₓ JT phase, where 0≤ x ≤1; which keeps a unit cell with orthorhombic symmetry that is described by the different space groups contained in Table 10, according with the space groups description in the "International Tables for Crystallography". The cell parameters of the unit cell vary within the following interval: "***a***" from 0.283 to 0.324 nm, "***b***" from 0.354 to 0.395 nm and "***c***" from 0.696 to 1.453 nm, with α=β=γ=90°; depending on the synthesis general conditions. Likewise, the resulting material has a pore diameter in the interval of 3 to 50 nm and a specific area of 5 to 500 m²/g, preferably from 100 to 400 m²/g; and it is characterized by tubular structures and /or fibrilar structures with a length between 10 and 1,000 nm.

The textural properties of the nanostructures of TiO₂₋ₓ JT phase, where 0≤ X ≤1, which are aims of the present invention, are decreased as the temperature of the thermal treatment increases under controlled atmosphere; however, the observed nitrogen adsorption and desorption isotherm is characteristic of the mesoporous nature of the nanotubes, which is confirmed through transmission electron microscopy as it is shown in Figure 3 ((d), (e) and (f)).

In Figure 1 the images from scanning electron microscopy (SEM) are presented and where it is observed the nanofibrilar and/or nanotubular morphology of the hydrogen titanate, of the mixed sodium and hydrogen titanate and of the TiO₂₋ₓ JT phase, where 0≤ x ≤1. The length of the fibers and/or tubes depends on the temperature of the hydrothermal or thermal treatment reflux conditions; the higher the temperature the higher the dimension of the fibers and/or tubes. Figure 1(a) shows aggregates of nanofibers and/or nanotubes of the hydrogen titanate and/or the mixed sodium and hydrogen titanate, which were obtained at low temperature, from 50 to 130°C. Figure 1(b) presents nanofibers and/or nanotubes with dimensions between 1 and 50 µm, which were obtained at temperatures between 130 and 160°C. Figure 1(c) displays the fibrilar and /or tubular morphology of the TiO₂₋ₓ JT phase, where 0≤x≤1, obtained by the thermal treatment, between 300 and 700°C and in controlled atmosphere, of the hydrogen titanates and/or of the mixed sodium and hydrogen titanates synthesized between 160 and 250°C. As it is observed, the fibrilar morphology is kept.

In figure 2 the X-ray dispersive energy spectra (EDX) are presented. In Figure 2(a) it is observed that the spectrum of the materials that were not submitted to thermal treatment is basically composed of Ti and O, with an O/Ti atomic ratio between 1.8 and 2.5, which suggests the presence of a hydrogen titanate. Likewise, in Figure 2(b) the spectrum of the mixed sodium and hydrogen titanate material indicates that its composition is Ti, O and Na, with an O/Ti atomic ratio between 1.8 and 2.5. In Figure 2(c), the spectrum of the materials which were thermally treated in an oxidizing or inert atmosphere is shown. It is observed that the chemical composition is Ti and O, with an O/Ti atomic ratio between 1 and 1.9, which indicates a high oxygen deficiency.

In Figure 3 the transmission electron microscopy is shown, where (a), (b) and (c) correspond to nanotubes and/or nanofibers of hydrogen titanates and/or mixed sodium and hydrogen titanates and (d), (e) and (f) correspond to nanotubes and/or nanofibers of TiO₂₋ₓ JT phase, where 0≤ x ≤1. In Figure 3(a) and 3(d) it is observed that both materials basically have nanotubular and/or nanofibrilar structures with a length of several micrometers, between 0.01 and 100 µm, and they have diameters between 3 and 50 nm. The nanotubes are generally opened at the ends.

Figure 3 (b) and 3(e) present the hollow transversal section of the nanotubes displaying an open internal spacing with diameters between 2 and 15 nm. In Figure 3(c) it is shown that the walls of the nanotubes of hydrogen titanate and/or mixed sodium and hydrogen titanate are composed of approximately 1 to 5 structural layers. In Figure 3(f) it is observed that the nanotubes of the TiO₂₋ₓ JT phase, where 0≤ x ≤1, are as well composed of 1 to 5 structural layers.

By comparing the images corresponding to the hydrogen titanate and the mixed sodium and hydrogen titanate with the ones corresponding to the TiO₂₋ₓ JT phase, where 0≤ x ≤1 it is established that even after a thermal treatment in controlled atmosphere, at a temperature between 300 and 700°C; the fibrilar morphology and / or nanotubular morphology of the materials is kept. Thus proving that the nanotubular and /or nanofibrilar structure obtained through the procedure, aim of the present invention, is thermically stable, keeping its high specific area.

In Figure 4, the X-ray diffraction patterns of the nanofibers, nanotubes, nanoscrolls, nanorods, nanowires and/or microfibers are displayed, *in an illustrative way,* which correspond to the hydrogen titanate and/or mixed sodium and hydrogen titanate obtained under the preferred modalities of the present invention at two temperatures of synthesis. The intensity and the position of the diffraction signal corresponding to the crystalline surface (001) vary depending on the size of the fibers and/or tubes. The spectrum label as (c) in Figure 4 corresponds to an X-ray diffraction pattern of big fibers obtained at high temperatures, while the spectrum label as (b) in Figure 4 corresponds to an X-ray diffraction pattern of small fibers obtained at low temperature. The signals are broaden and less defined as the diameter and length of fibers decrease. Also in Figure 4 the X-ray diffraction pattern of a titanium compound used for the synthesis, meaning TiO₂ with anatasa structure, is shown in the spectrum label as (a), with the aim of illustrating the structural changes that take place during the hydrothermal synthesis or thermal synthesis with reflux according with the procedure which is aim of the present invention.

In figure 5 it can be seen that the nanostructures, nanofibers and/or nanotubes present a type IV isotherm (classification of the International Union of Pure and Applied Chemistry (IUPAC)), a histeresis is observed at a relative pressure (P/Po) of 0.4-0.6, indicating the existence of mesoporous nanostructures. The isotherm presented in this Figure is characteristic of both the hydrogen titanate and/or mixed sodium and hydrogen titanate and the TiO₂₋ₓ JT phase, where 0≤ x ≤1. Though the application of the BET method (Brunauer Emmett Teller) it was determined that the nanotubes and/or nanofibers display a specific area between 5 and 500 m²/g, which indicates that the obtained materials of the present invention maintain their nanotubular structure and therefore their mesoporosity and high specific area when are submitted to thermal treatment in an atmosphere that can be oxidative, reductive or inert.

In Figure 6 it is observed the porous distribution obtained from the application of the BJH mathematic model (Barrer Joyner Halenda) to the desorption isotherms shown in Figure 5, from which it is possible to determine that the nanostructures present a very homogeneous distribution of the pore size and in the range of 2 and 10 nm. The pore size distribution is associated to the internal diameter of the nanofibers and/or nanotubes, it was also determined in the transmission electron microscopy studies. Besides the nanostructured materials, aims of the present invention, present a high pore volume, with a value between 0.3 and 1.5.

In Figure 7 it is shown the X-ray diffraction pattern characteristic of the orthorhombic TiO₂₋ₓ JT structure, where 0≤ X ≤1, that comes from the hydrogen titanate and/or the mixed sodium and hydrogen titanate submitted to thermal treatment at a temperature between 300 and 700 °C and under a dynamic oxidizing atmosphere.

In figure 8, it is presented the schematic model of the nanotubes and/or nanoscrolls formation, which consists in the rolling and/or folding of laminar nanostructures and/or nanoparticles with laminar structure. *The overlapping of semitubular and semicircular structures is as well considered.* To the best of our knowledge this is nanotube structure not reported before. With this mechanism the formation of the nanotubes of hydrogen titanates and/or mixed sodium and hydrogen titanates is described, which occurs during the procedure aim of the present invention.

In Figure 9, it is presented the unit cell of the structure TiO₂₋ₓJT, where 0≤X ≤1, constituted of oxygen and titanium, with orthorhombic symmetry and that constitutes the basic unit of construction of the layers and/or sheets that roll and/or fold to form the nanotubes and/or nanoscrolls, by means of the mechanism illustrated in Figure 8. In Figure 9(a) it is shown a tridimensional view of the unitary cell and In Figure 9 (b) it is shown a bidimensional view along the ***a,b*** crystalline plane.

In figure 10 (a) a nanotube and/or nanoscroll is presented and built with the unit cell of TiO₂₋ₓ JT phase, where 0≤ x ≤1, presented in Figure 9; by following the formation model mechanism of nanotubes and nanoscrolls presented in Figure 8. It is also schematically illustrated the spatial position of the unit cell and its cell parameters in the nanotubes or nanoscrolls. The c parameter of the unit cell is akin to the spacing between the layers that constitute the walls of the nanotube and/or nanoscroll. Figures 10(b) and 10(c) present the X-ray diffraction patterns simulated for the model presented in the Figure 10(a) and for the structures shown in the Tables 2 and 10, which are characteristic of the nanotubes and/or nanofibers of the hydrogen titanates and/or of the mixed sodium and hydrogen titanates as well as of the TiO₂₋ₓ JT phase, where 0≤x ≤1.

In Figure 11 the following images are shown: (a) transmission electron microscopy (TEM) image, which presents the morphology of the nanotubes of TiO₂₋ₓ JT phase, where 0≤x ≤1; (b) experimental electron diffraction pattern of the nanotube or nanofiber presented in Figure 11(a); (c) shows the simulated electron diffraction pattern for the theoretical model of the unit cell of the TiO₂₋ₓ JT phase, where 0≤x ≤1, with that is presented in Figure 9. The (200) reflection is associated with the ***a*** cell parameter of the unit cell and it has a value in the range of 0.283 nm and 0.324 nm. The (020) reflection is associated with the ***b*** cell parameter of the unit cell and it has a value in the range of 0.354 and 0.395 nm. In addition, it is also observed that the nanofibers and/or nanotubes preferably grow in the ***b*** axis direction.

Figure 12 shows a high resolution transmission electron microscopy (HRTEM) of a fiber and/or tube where an inter-planar spacing of approximately 0.7 nm is observed, and that corresponds to the crystalline plane (001) of the structure of TiO₂₋ₓ JT phase, where 0≤ x ≤1; and associated with the c cell parameter of the unit cell, with a value in the range of 0.6 and 1.5 nm.

### EXAMPLES

Below we present 41 examples related with the titanium oxide nanostructured materials with the crystalline structure TiO₂₋ₓ JT phase, where 0≤ x ≤1, that are thermically stable and that are produced from a precursor of hydrogen titanate and/or mixed sodium and hydrogen titanate with orthorhombic structure, with our synthesis procedure. All the examples are aims of the present invention as formerly described, without limiting their scope.

### EXAMPLES 1 TO 7

The examples 1 to 7 illustrate the preparation of the nanotubes of hydrogen titanate and/or mixed sodium and hydrogen titanate which are isostructural to the structure TiO₂₋ₓ JT phase, where 0≤ x ≤1, starting from amorphous titanium oxihydroxide, prepared by the sol-gel method and under the synthesis modality involving a hydrothermal treatment, aim of the present invention.

1.5 g of amorphous titanium oxihydroxide, obtained by the sol-gel method, is placed in contact with 100 cm³ of a 5 to 20 M alkaline solution of sodium hydroxide. Each of the prepared suspensions in examples 1 to 7 was poured in a closed vessel. In Table 1, the different temperatures used in the synthesis for each example are specified, within an interval from 100 to 180 °C, and during a reaction time between 12 and 96 h.

The resulting materials from each example is submitted to a ionic exchange treatment that involves a washing process with a 1M solution of chlorhidric acid until the pH of the suspension lowers to a value between 1 and 7, then all the solutions are aged for a period of time ranging from 12 to 18 h. After the aging, each suspension is filtered; then the thus obtained solids are washed with abundant deionized water and dried at 110 °C.

As it can be seen in Figure 1(a) and 1(b), the materials obtained are basically constituted of nanofibers and/or nanotubes. In Figure 4, lines (b) and (c), it can be observed that the X-ray diffraction patterns correspond to a hydrogen titanate and/or to a mixed sodium and hydrogen titanate with orthorhombic structure, whose unit cell is described by the space groups *59 Pmmn,* 63 *Amma,* 71 *Immm, 63 Bmmb* and the atomic positions presented in Table 2. The intensity and the position of the X-ray diffraction signals corresponding to (001) surface, varies according to the fibers size and the piling level among the nanotubes layers respectively. We recall that Figure 4 is a representative X-ray diffraction pattern of the hydrogen titanate and/or mixed sodium and hydrogen titanate and of anatase.

**Table 1. Textural properties of the nanotubes of hydrogen titanate and/or the mixed sodium and hydrogen titanates, obtained from amorphous titanium oxihydroxide as starting material.**

| Sample | Reaction Temperature (°C) | Reaction Time (h) | Area (m²/g) | Pore Volume (cm³/g) | Pore Diameter (nm) |
|---|---|---|---|---|---|
| 1 | 100 | 48 | 410 | 0.51 | 3.5 |
| 2 | 120 | 48 | 333 | 0.65 | 4.7 |
| 3 | 140 | 48 | 342 | 0.71 | 5.0 |
| 4 | 160 | 48 | 278 | 0.74 | 6.7 |
| 5 | 180 | 48 | 44 | 0.42 | 21.4 |
| 6 | 100 | 12 | 272 | 0.37 | 4.0 |
| 7 | 100 | 96 | 43 | 0.15 | 6.7 |

As it can be seen in Table 1, depending on the temperature and the hydrothermal reaction time, the nanotubes and/or nonofibers present a specific area between 40 and 500 m²/g and an average pore diameter between 2 and 25 nm. It is also seen that at high reaction temperatures, above 160 °C as in example 5, the specific area of the materials decreases due to the nanofibers and/ or nanotubes growth; this same effect is produced with a long reaction time, example 7. The nanotubes are opened at the ends, with an internal diameter between 3 and 10 nm and 1 to 50 layers with a spacing of 0.6 to 1.0 nm, between layers, as it can be seen in Figure 3(a, b and c).

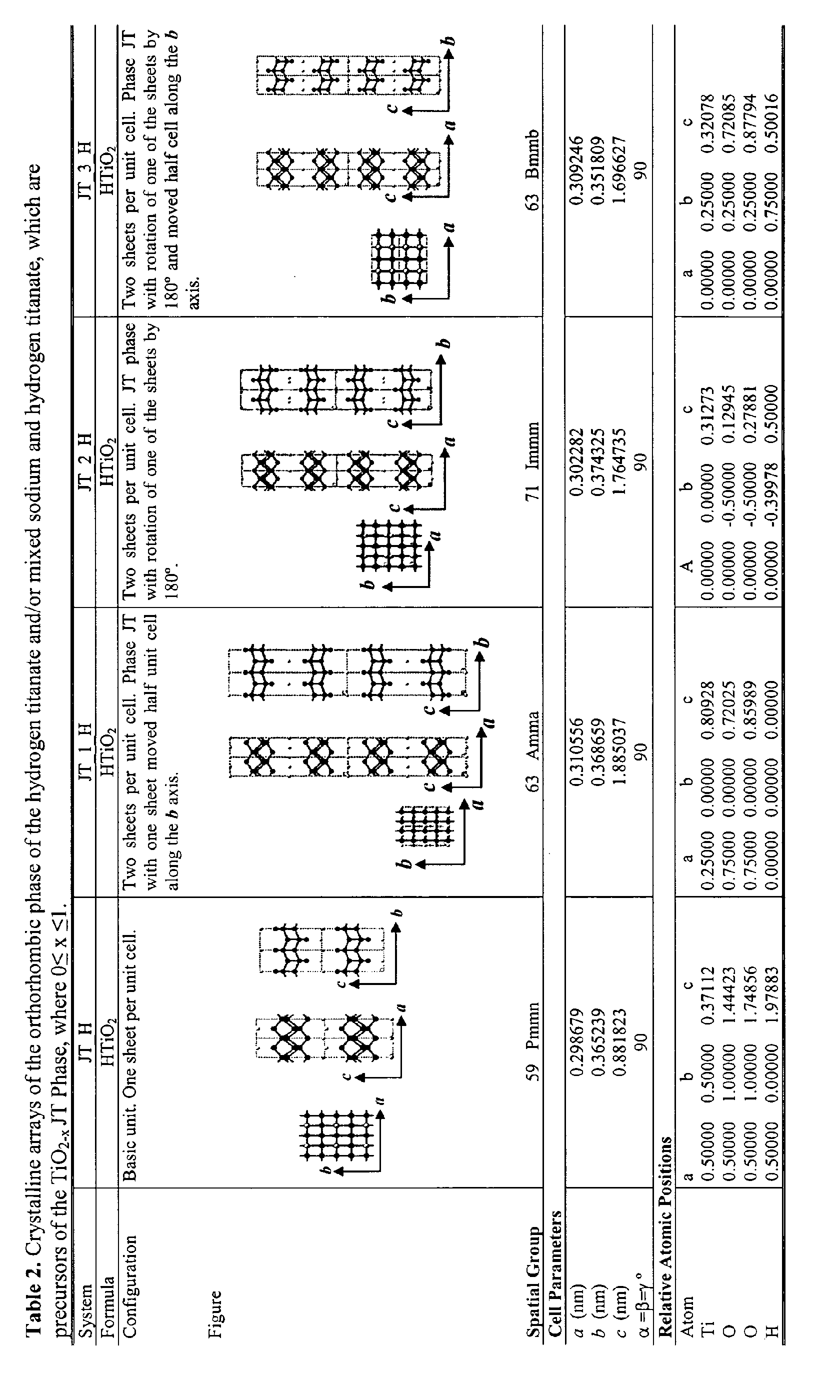

### EXAMPLES 8 TO 15

The examples 8 to 15 illustrate the preparation of the nanotubes and/or nanofibers of hydrogen titanate and/or mixed sodium and hydrogen titanate; starting from a titanium oxide (with anatase crystalline structure, a crystal size of 22 nm, a specific area of 102 m²/g, a pore volume of 0.51 cm³/g, and a pore diameter of 11.3 nm) and using a synthesis procedure which involves a thermal treatment under reflux conditions, aim of the present invention.

7.5 g of titanium oxide with anatase structure is placed in contact with 500 cm³ of a 5 to 20 M aqueous solution of sodium hydroxide. Each of the prepared suspensions in examples 8 to 14 was submitted to a thermal treatment, under reflux conditions, at a temperature between 80 and 110 °C. In Table 3, it is specified the reaction time and temperature used in each example. The time interval is between 3 and 48 h. Only in the case of the example 15 the formed suspension, containing the titanium precursor and the alkaline metal hydroxide solution, was submitted to a hydrothermal treatment at 160 °C in a closed system under autogenous pressure.

The resulting material from each example, are submitted to a ionic exchange treatment through a washing process with a 1 M solution of chlorhydric acid until the pH of the suspension lowers to a value between 1 and 7. Then all the solutions are aged for a period of time between 12 to 18 h. Finally, each of the obtained suspensions is filtered, and the thus obtained solids are washed with abundant deionized water and dried at 110°C.

As it is observed in Figure 1(a and b) and in Figure 3(a, b and c), as well as in the X-ray diffraction, Figure 4 lines (b) and (c), the obtained materials are basically constituted of nanofibers and/or nanotubes and their structure correspond to a hydrogen titanate and/or mixed sodium and hydrogen titanate, which present an structural array with orthorhombic symmetry, which unit cell is described by the space groups: *59 Pmmn, 63 Amma, 71 Immm* and *63 Bmmb* and with the cell parameters and atomic positions presented in Table 2. We recall that Figure 4 is a representative X-ray diffraction pattern of the hydrogen titanate and/or mixed sodium and hydrogen titanate and of anatase.

**Table 3 Textural Properties of the nanotubes of hydrogen titanate and/or mixed sodium and hydrogen titanate obtained from anatase titanium oxide as starting material.**

| Sample | Reaction Temperature (°C) | Reaction Time (h) | Area (m²/g) | Pore Volume (cm³/g) | Pore Diameter (nm) |
|---|---|---|---|---|---|
| 8 | 100 | 3 | 330 | 0.83 | 5.6 |
| 9 | 100 | 6 | 331 | 0.87 | 5.6 |
| 10 | 100 | 12 | 401 | 0.93 | 5.3 |
| 11 | 100 | 24 | 314 | 1.0 | 5.9 |
| 12 | 100 | 48 | 198 | 0.61 | 6.5 |
| 13 | 85 | 48 | 301 | 0.73 | 6.2 |
| 14 | 110 | 6 | 287 | 0.64 | 5.6 |
| 15 | 160* | 48 | 181 | 0.75 | 11.3 |

| | | | | | |
|---|---|---|---|---|---|
| *Hydrothermal treatment. | | | | | |

As it can be seen in Table 3, depending on the temperature and reaction time fixed during the thermal treatment, the resulting materials present: a specific area between 150 and 500 m²/g, an average pore diameter between 4 and 12 nm and a pore volume between 0.5 and 1.2 cm³/g. The nanotubes are opened at the ends and have: an internal diameter between 3 and 10 nm, 1 to 50 layers with a spacing of 0.6 to 1.0 nm, between layers; as it can be seen in Figure 3(a, b and c).

From examples 8 to 12 in Table 3 it is observed that the optimal thermal treatment time, under reflux conditions, is of 12 h. A lower or upper time decreases the isplayed specific area of the materials. On the other hand, it can be observed that for the experiments carried out at the same reaction time and at a temperature above 100°C, the specific area decreases, examples 9 and 14; while the decrease of the temperature at long reaction times, examples 12 and 13, favors the specific area of the nanostructures.

### EXAMPLE 16

This example illustrates the preparation of nanotubes and/or nanofibers of hydrogen titanate and/or mixed sodium and hydrogen titanate starting from a titanium oxide compound with a rutile type crystalline structure.

1.5 g of a titanium oxide compound with a rutile type crystalline structure is placed in contact with 100 cm³ of a 5 to 20 M aqueous solution of sodium hydroxide. The formed suspension is submitted to a hydrothermal treatment at a temperature of 180°C during 48 h and under autogeneous pressure in a closed system.

The resulting material is submitted to an ionic exchange treatment with a 1M solution of chlorhydric acid until the pH of the suspension lowers to a value between 1 and 7. Then the solution is aged for a period of time between 12 and 18 h. After aging, the suspension is filtered and the thus obtained solid is washed with abundant deionized water and dried at 110°C.

The material obtained in this example showed similar characteristics to the materials obtained in the former examples, 1 to 15. It is basically constituted of nanofibers and / or nanotubes Figure 1(a and b). Its X-ray diffraction pattern, Figure 4 lines (b) and (c), shows that its structure corresponds to a hydrogen titanate and/or to a mixed sodium and hydrogen titanate with orthorhombic structure, whose unit cell is described by any of the following spatial groups: *59 Pmmn, 63 Amma, 71 Immm* and *63 Bmmb,* reported in Table 2. We recall that Figure 4 is a representative X-ray diffraction pattern of the hydrogen titanate and/or mixed sodium and hydrogen titanate and of anatase.

The nanotubes and/or nanofibers are constituted by 1 to 50 layers, presenting a specific area between 50 and 100 m²/g and an average pore diameter between 2 and 15 nm.

### EXAMPLE 17

This example illustrates the preparation of nanotubes of hydrogen titanate and/or mixed sodium and hydrogen titantate starting directly from the rutile mineral.

1.5 g of highly crystalline rutile mineral is placed in contact with 100 cm³ of a 5 to 20 M aqueous solution of sodium hydroxide. The formed suspension is submitted to a hydrothermal treatment, at a temperature of 180°C, during 72 h and under autogeneous pressure in a closed system.

The resulting material is submitted to an ionic exchange treatment with a 1M solution of chlorhydric acid until the pH of the suspension lowers to a value between 2 and 6. Then the solution is aged for a period of time between 12 and 18 h. After aging, the suspension is filtered and the thus obtained solid is washed with abundant deionized water and dried at 110°C.

The material obtained in this example showed similar characteristics to the materials obtained in the former examples, 1 to 16. It is basically constituted of nanofibers and / or nanotubes Figure 1(a and b). Its X-ray diffraction pattern, Figure 4 line (c), shows that its structure corresponds to a hydrogen titanate and/or to a mixed sodium and hydrogen titanate with orthorhombic structure, whose unit cell is described by any of the following spatial groups: *59 Pmmn, 63 Amma, 71 Immm* and *63 Bmmb,* reported in Table 2. We recall that Figure 4 is a representative X-ray diffraction pattern of the hydrogen titanate and/or mixed sodium and hydrogen titanate and of anatase.

The nanotubes and/or nanofibers are constituted by several layers, presenting a specific area between 3 and 50 m²/g and an average pore diameter between 2 and 15 nm.

### EXAMPLE 18 TO 20

The examples 18 to 20 illustrate the preparation of the nanotubes of hydrogen titanate and/or mixed sodium and hydrogen titanate, starting from TiO₂ compounds with anatase structure and different aggregate sizes and different textural characteristics, which are presented in Table 4.

150 g of a TiO₂ compound with anatase structure, sample A to C in Table 4, are placed in contact with 3 liters of a 5 to 20 M aqueous solution of sodium hydroxide. Each of the formed suspensions, for each titanium oxide sample with anatase structure from the examples 18 to 20, is submitted to a hydrothermal treatment at a temperature of 100°C under autogeneous pressure in a closed system and during 24 h.

The resulting material was put into contact with a 1 M solution of chlorhydric acid, to perform the ionic exchange where the sodium is replace by hydrogen, until the pH of the suspension lowered its value between 1 and 7. Then the suspension is kept under constant stirring for a period of time between 1 and 24 hours. Finally, the suspension was filtered, it was washed with abundant deionized water and the solid was dried at 110°C.

The resulting materials in each of the examples are basically composed of nanofibers and / or nanotubes, according to what is observed in Figure 1 (a and b) and Figure 3 (a, b and c). The X-ray diffraction patterns, Figure 4: lines (b) and (c), show that the structure corresponds to a hydrogen titanate and/or to a mixed sodium and hydrogen titanate with orthorhombic structure and a unit cell described by the space groups presented in Table 2. Also in Figure 4, it is observed that the intensity and the position of the X-ray diffraction peak that corresponds to the (001) plane, varies depending on the size of the fibers and depending on the piling level between the layers of the nanotubes, which are ruled by the textural and morphological characteristics of the TiO₂ used as starting material. We recall that Figure 4 is a representative X-ray diffraction pattern of the hydrogen titanate and/or mixed sodium and hydrogen titanate and of anatase.

Under the same synthesis conditions the nanofibers and /or nanotubes growth depends on the textural and morphological characteristics of the TiO₂ compound used as starting material. The nanotubes are constituted of 1 to 50 layers, with a space between layers of 0.6 to 1.7 nm. The nanotubes are opened by the ends as it is observed in Figure 3 (b) with an internal diameter between 3 and 10 nm, presenting a specific area between 300 and 450 m²/g and a pore average diameter between 4 and 10 nm, as it can be seen in Table 5.

**Tabla 4 Textural properties of the titanium oxide with anatase structure used as starting material for the synthesis of the hydrogen titanates and /or mixed sodium and hydrogen titanates.**

| Anatase Phase TiO₂ Compound | Aggregate Size (µm) | Specific Area (m²/g) | Average Pore Volume (cm³/g) | Average Pore Diameter (nm) |
|---|---|---|---|---|
| A | 0.5 a 2.5 | 102 | 0.42 | 16.5 |
| B | 2.5 a 8 | 101 | 0.37 | 14.5 |
| C | < 1 | 324. | 0.33 | 4.0 |

**Tabla 5 Textural properties of titanium oxide with tubular structure obtained for examples 18 to 20.**

| Example | TiO₂ Anatase Phase Compound Table 4 | Specific Area (m²/g) | Pore Volume (cm³/g) | Average Pore Diameter (nm) |
|---|---|---|---|---|
| 18 | A | 316 | 0.72 | 9.1 |
| 19 | B | 389 | 0.70 | 7.2 |
| 20 | C | 401 | 0.77 | 7.7 |

| | | | | |
|---|---|---|---|---|
| Conditions: 100°C, autogenous pressure, reaction time of 24 h, exchange of 18 h. | | | | |

### EXAMPLE 21 A 25

The examples 21 to 25 illustrate the influence of the hydrothermal reaction time in the synthesis of nanotubes and/or nanofibers of hydrogen titanate and/or mixed sodium and hydrogen titanate starting from a TiO₂ compound with anatase phase whose characteristics are described in Table 4, samples A to C.

In each case 150 g of compounds A and C in Table 4, which are titanium oxide with anatase structure, were put into contact with 3 litters of a 5 to 20 M aqueous solution of sodium hydroxide. The suspension formed was submitted to a hydrothermal treatment, at a 100°C temperature under autogenous pressure in a closed system during a period of time between 3 and 14 h.

The resulting materials of each example were put in contact with a 1M chlorhydric acid solution, to exchange the sodium ions for hydrogen, until the pH of the suspension lowered to a value between 1 and 7. Then the suspension was left on constant stirring for a period of time between 1 and 24 hours. After aging, the suspension was filtered and the obtained solid was washed with sufficient deionized water and dried at 110°C.

The resulting materials of each of the examples presented similar characteristics to the former examples, 1 to 25. They are basically constituted of nanofibers and/or nanotubes, according to what is observed in Figures 1(a and b) and 3 (a, b and c). In Figure 4, curves b and c, it is observed that the structure corresponds to a hydrogen titanate and/or to a mixed sodium and hydrogen titanate with orthorhombic structure and the unit cell is described by the spatial groups and atomic positions presented in Table 2. Also, in Figure 4, it is observed that the intensity and the position of the X-ray diffraction peak that corresponds to the (001) plane, varies depending on the size of the fibers and depending on the piling level between the layers of the nanotubes. Thus, the growth of the nanotubes both in the radial direction and the longitudinal direction is also ruled by the time of the hydrothermal reaction and the ionic exchange time with an acid solution. We recall that Figure 4 is a representative X-ray diffraction pattern of the hydrogen titanate and/or mixed sodium and hydrogen titanate and of anatase.

The nanotubes are composed of 1 to 50 layers, with a 0.6 to 1.7 nm of spacing between layers. The nanotubes are opened, as it can be seen in Figure 3(b) with an internal diameter between 3 and 10 nm, presenting a specific area between 380 and 470 m²/g and an average pore diameter between 5 and 8 nm, as can be observed in Table 6.

**Table 6 Textural properties of the nanotubes of hydrogen titanate and/or mixed sodium and hydrogen titanates, obtained at different reaction times and ionic exchange according to examples 21 to 25.**

| Example | TiO₂ Anatase Phase Compound Table 4 | Reaction Time (h) | Ionic Exchange Time (h) | Specific Area (m²/g) | Average Pore Volume (cm³/g) | Average Pore Diameter (nm) |
|---|---|---|---|---|---|---|
| 21 | A | 3 | 1 | 414 | 0.78 | 7.6 |
| 22 | A | 3 | 18 | 450 | 0.72 | 6.4 |
| 23 | A | 6 | 18 | 386 | 0.63 | 6.6 |
| 24 | C | 3 | 1 | 464 | 0.67 | 5.8 |
| 25 | C | 6 | 1 | 464 | 0.77 | 6.6 |

| | | | | | | |
|---|---|---|---|---|---|---|
| Conditions: 100°C, autogenous pressure. | | | | | | |

As it can be seen from Table 6, using the same starting material and at the same temperature of synthesis, the growth of the nanofibers and /or naotubes depends on time both the hydrothermal reaction and the ionic exchange; the larger the hydrothermal reaction time, the bigger the nanotubes size, while as the ionic exchange time is increased, with the acid solution at a constant pH, the size of the nanofibers decreases.

### EXAMPLES 26 TO 29

Examples 26 to 29 illustrate the synthesis of the nanotubes of hydrogen titanate and/or mixed sodium and hydrogen titanate starting from the A to C compounds of Table 4, which comprise different compounds of TiO₂ anatase phase, used as starting material.

In each case 150 g of titanium oxide with anatasa structure, compounds A to C in Table 4, were put into contact with 3 litters of a 5 to 20 M aqueous solution of sodium hydroxide. The suspension formed was submitted to a synthesis procedure consisting of a thermal treatment under reflux condition, at a temperature of 100°C and at atmospheric pressure, in a system with continuous stirring between 0 and 1,000 rpm, during a 3 hour reaction period.

The resulting material was put in contact with a 1M solution of chlorhydric acid to perform a sodium ionic exchange for hydrogen until the pH of the suspension lowers to a value between 1 and 7. Then the suspension was aged for a 3 hour period for examples 26 to 28 and for an 18 h period for the case of example 29. After aging the suspension was filtered and the obtained solid was washed with sufficient deionized water and dried at 110°C.

The resulting materials of each of the examples presented similar characteristics to the former examples, 1 to 25. They are basically constituted of nanofibers and/or nanotubes, according to what is observed in Figures 1(a and b) and 3 (a, b and c). The X-ray diffraction patterns obtained are similar to those shown in Figure 4, curves b and c, which correspond to the structure of the hydrogen titanate with orthorhombic structure whose unit cell is described by the spatial groups and atomic positions presented in Table 2. Also, in Figure 4, it is observed that the intensity and the position of the X-ray diffraction peak that corresponds to the (001) plane varies depending on the size of the fibers and depending on the piling level between the layers of the nanotubes. The textural and morphological characteristics of the nanotubes resemble those of the TiO₂ used as starting material.

**Table 7 Textural properties of the nanotubes of hydrogen titanate and/or mixed sodium and hydrogen titanate, obtained from different anatase compounds using a procedure that involves thermal treatment under reflux conditions, with different ionic exchange time according to examples 26 to 29.**

| Example | TiO₂ Anatase Phase Compound Table 4 | Reaction Time (h) | Ionic Exchange Time (h) | Specific Area (m²/g) | Average Pore Volume (cm³/g) | Average Pore Diameter (nm) |
|---|---|---|---|---|---|---|
| 26 | A | 3 | 3 | 414 | 0.83 | 8.0 |
| 27 | B | 3 | 3 | 369 | 0.58 | 6.3 |
| 28 | C | 3 | 3 | 417 | 0.65 | 6.3 |
| 29 | B | 3 | 18 | 346 | 0.61 | 7.0 |

| | | | | | | |
|---|---|---|---|---|---|---|
| Conditions: 100°C, autogenous pressure. | | | | | | |

As can be seen from Table 7, at constant synthesis conditions, the nanofibers and /or nanotubes growth depends on the textural and morphological characteristics of the TiO₂ anatase phase used as starting material, when the later is submitted to a thermal treatment under reflux conditions. The nanotubes are composed of 1 to 50 layers, with a space between layers of 0.6 to 1.7 nm. The nanotubes are opened, as it can be seen in Figure 3(b) with an internal diameter between 3 and 10 nm, presenting a specific area between 340 and 420 m²/g and an average pore diameter between 2 and 10 nm. We remind that Figure 3 is an example of a typical TEM image of our hydrogen titanate and/or mixed sodium and hydrogen titanate material.

### EXAMPLES 30 and 31

Examples 30 and 31 illustrate the synthesis of the nanotubes of hydrogen titanate and /or mixed sodium and hydrogen titanate starting from the B compound in Table 4. There is no need of acid treatment to perform the ionic exchange of sodium by hydrogen.

150 g of the B compound in Table 4, which is a titanium oxide with anatase structure, was put in contact with 3 litters of a 5 to 20 M aqueous solution of sodium hydroxide. The suspension formed was submitted to a synthesis procedure comprising a hydrothermal treatment under reflux conditions, at a 100°C temperature, autogenous pressure in a closed system, with mechanical stirring between 0 and 1,000 rpm, during a period of 3 hours of reaction time.

In comparison with the former examples, in the case of example 30 the resulting material was not put in contact with a chlorhydric acid solution to perform the ionic exchange of sodium by hydrogen, but in this case the solution was exhaustively washed with ethyl alcohol until de suspension pH decreased to a value between 6 and 7. It was filtered, and dried at 110°C.

For the case reported in example 31, the resulting material from the hydrothermal treatment stage was exhaustively washed with abundant bi-distilled water until the suspension pH decreased to a value between 7 and 8, then it was filtered and dried at 110°C.

The resulting materials in each of the examples presented similar characteristics to the former examples 1 to 29. They are basically constituted of nanofibers and / or nanotubes according to Figure 1(a and b) and Figure 3(b). The obtained X-ray diffraction patterns are similar to those presented in Figure 4, lines b and c, which show that the structure corresponds to a hydrogen titanate and/or to a mixed sodium and hydrogen titanate with orthorhombic structure, whose unit cell is described by any of the following spatial groups: *59 Pmmn, 63 Amma, 71 Immm* and *63 Bmmb,* reported in Table 2.

The nanotubes and/or nanofibers are constituted by 1 to 50 layers with a space between layers of 0.6 to 1.7 nm. The nanotubes are opened at the end (Figure 3b) and they present an internal diameter between 3 and 10 nm, a specific area between 180 and 310 m²/g and an average pore diameter between 4 and 11 nm, as it can be seen in Table 8.

**Table 8 Textural properties of the hydrogen titanate and /or mixed sodium and hydrogen titanate obtained by the procedure of washings with water or ethyl alcohol.**

| Example | Washing Solvent | Specific Area (m²/g) | Pore Volume (cm³/g) | Pore Diameter (nm) |
|---|---|---|---|---|
| 30 | ethyl alcohol | 303.96 | 0.544 | 7.16 |
| 31 | water | 185 | 0.203 | 4.38 |

From examples 30 and 31, it can be said that the ionic exchange of sodium by hydrogen can be done with different washing solvents.

### EXAMPLES 32 to 41

The nanotubes with hydrogen titanate structure obtained through the procedures described in the former examples, were submitted to a thermal treatment process at a temperature between 200 and 500°C in an dynamic oxidizing or inert atmosphere, thus obtaining the nanostructured material TiO₂₋ₓ JT phase, where 0≤ x ≤1, with an orthorhombic structure and whose structural characteristics can be described by any of the following spatial groups: *59 Pmmn, 63 Amma, 71 Immm* and *63 Bmmb;* and the cell parameters and atomic positions presented in Table 9.

The materials obtained in the examples 32 to 41 present an orthorhombic structure of TiO₂₋ₓ JT phase, where 0≤ x ≤1, aim of the present invention, and that keep the nanofibers and/or nanotubes morphology that is present in the hydrogen titanates and/or mixed sodium and hydrogen titanates, which originated these materials after a thermal treatment in a dynamic oxidizing or inert atmosphere as it is shown in the scanning electron microscopy images (SEM) in Figure 1(c) and Figure 3(d, e and f).

Also, the nanotubes obtained after the thermal treatment in oxidizing or inert atmosphere, present an orthorhombic structure named by the authors as the JT phase of titanium oxide TiO₂₋ₓ, where 0≤ X ≤1. As it can be seen in Figure 7, the X-ray diffraction peak corresponding to the (001) plane is kept. This peak is also observed in the case of the precursor materials, Figure 4 curves b and c, which are the hydrogen titanate and/or the mixed sodium and hydrogen titanate.

Through the electron dispersive spectroscopy (EDS) spectrum presented in Figure 2(c), it is concluded that the nanostructures TiO₂₋ₓ JT phase, where 0≤ x ≤1, present a high oxygen deficiency and that their atoms present a crystalline orthorhombic symmetry; the unit cell is described by any of the spatial groups and the atomic positions presented in Table 9.

The materials with the orthorhombic structure TiO₂₋ₓ JT phase, where 0≤ x ≤1, aims of the present invention, present a morphology of nanofibers and/or nanotubes as it can be observed in Figure 1(c) and Figure 3 (d, e and f). The structure with orthorhombic symmetry is determined from the electron diffraction pattern presented in Figure 11(b) and that was obtained from the nanofibers observed in Figure 11(a). In the electron diffraction pattern of Figure 11(b) it is observed the (200) reflection, which is related to the unit cell parameter ***a*,** and that presents a value between 0.283 and 0.324 nm. The (020) reflection is related to the unit cell parameter ***b***, of the unit cell presented in Figure 9, and it presents a value between 0.354 to 0.395 nm. It is observed that the nanofibers and/or nanotubes grow preferably in the *b* axis direction.

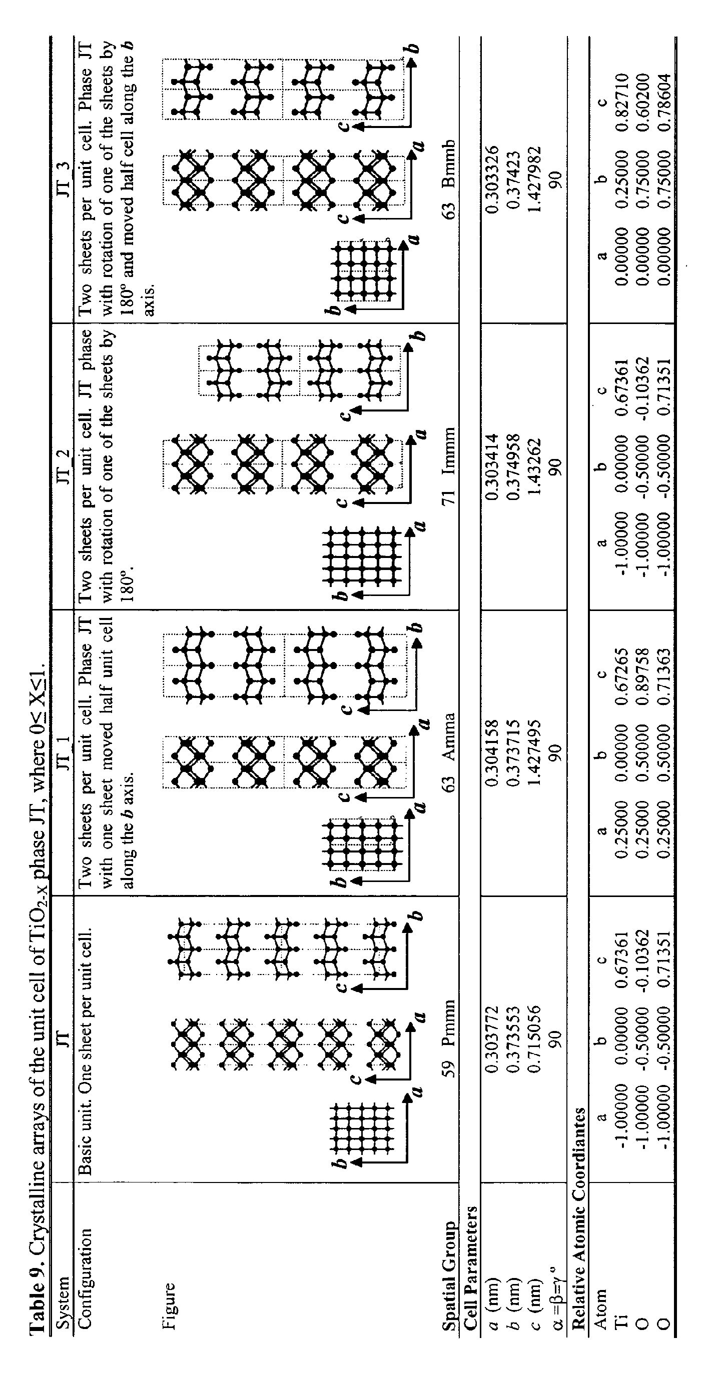

In Figure 12 the nanotubes obtained in the examples 32 to 41 with orthorhombic structure are shown, which present an interlayer space of 0.7 nm that corresponds to the (001) plane and that is related to the c parameter of the unit cell of the orthorhombic (JT) phase of TiO₂₋ₓ, where 0≤ X ≤1; with a value between 0.695 and 1.453 nm and that also represents the space between the layers that constitute the nanotube walls, as observed in figure 10.

Also, the titanium oxide nanotubes with structure TiO₂₋ₓ JT phase, where 0≤x ≤1, present a specific area between 100 and 400 m²/g, with a distribution of pore size that presents a pore average diameter between 6 and 10 nm, as shown in Table 10. The titanium oxide nanotubes with TiO₂₋ₓ phase JT, where 0≤ X ≤1, are originated from the thermal treatment, in oxidizing or inert atmosphere, of the hydrogen titanates and /or mixed sodium and hydrogen titanates, keeping the nanotubular structure and the high specific area after the thermal treatment, which means that this material, the titanium oxide nanotubes with structure TiO₂₋ₓ JT phase, where 0≤ x ≤1, is thermically stable with potential applications as catalysts and/or as a catalysts support and in other processes involving the adsorption phenomena.

From examples 32 to 41 it can be said that while the initial area of the titanate precursor determines the area of the JT material, a high temperature lowers the JT area. Notice that in examples 32 to 33 the titanate areas are 342 m²/g and 278 m²/g repectively, whereas in examples 34 through 40 the titanate area is around 400m²/g, hence we get a JT material with larger area. As a difference to be noticed is that in example 40 the titanate area is only 369 m²/g, which is larger but not much from that in example 32. Nevertheless the difference in the JT area is quite important. This can be explained because the thermal treatment was different.

**Table 10 Textural properties of the nanotubes with structure TiO₂₋ₓ JT phase, where 0≤ x ≤1, prepared from examples 3 and 4 as starting materials.**

| Example | Example Precursor | Temperature (°C) | Time (h) | Area (m²/g) | Pore Volume (cm³/g) | Pore Diameter (nm) |
|---|---|---|---|---|---|---|
| 32^{a} | 3 | 400 | 4 | 214 | 0.74 | 7.7 |
| 33^{a} | 4 | 400 | 4 | 127 | 0.44 | 9.2 |
| 34^{a} | 19 | 200 | 4 | 348 | 0.73 | 6.3 |
| 35^{a} | 19 | 300 | 4 | 339 | 0.64 | 7.6 |
| 36^{a} | 19 | 400 | 4 | 289 | 0.70 | 9.7 |
| 37^{a} | 20 | 400 | 4 | 319 | 0.54 | 4.8 |
| 38^{a} | 20 | 400 | 4 | 323 | 0.54 | 4.8 |
| 39^{a} | 26 | 400 | 4 | 326 | 0.54 | 4.7 |
| 40^{a} | 27 | 400 | 4 | 325 | 0.54 | 4.7 |
| 41^{b} | 27 | 400 | 4 | 286 | 0.68 | 7.1 |

| | | | | | | |
|---|---|---|---|---|---|---|
| ^{a}Thermal treatment temperature in dynamic oxidizing atmosphere. ^{b}Thermal treatment in nitrogen atmosphere. | | | | | | |

## Claims

1. A nanostructured titanium oxide material (TiO₂₋ₓ, where 0≤ X ≤1), which is **characterized** for having an orthorhombic crystalline structure, which has been named by the authors as JT, thermically stable and with a nanofibrilar and/or nanotubular morphology, constituted by piled structural layers, which are folded or rolled inwards themselves, or formed from overlapped semitubes.

2. A nanostructured titanium oxide material (TiO₂₋ₓ, where 0≤ X ≤1), in agreement with clause 1, **characterized** because it a unit cell with orthorhombic symmetry, which is described by different spatial groups: *59 Pmmn,* 63 *Amma, 71 Immm* and 63 *Bmmb.*

3. A nanostructured titanium oxide material (TiO₂₋ₓ, where 0≤ X ≤1), in agreement with clause 1, **characterized** because the cell parameters of the unit cell with orthorhombic symmetry are: ***a*** = from 0.283 to 0.324 nm, ***b*** = from 0.354 to 0.395 nm and ***c***= from 0.695 to 1,453 nm, with α=β=γ 90°, depending on the synthesis conditions of the hydrogen titanate and/or mixed sodium and hydrogen titanate and the conditions of their thermal treatment.

4. A nanostructured titanium oxide material (TiO_{2-X}, where 0≤ X ≤1), in agreement with clause 1, **characterized** because the crystalline structure JT has a TiO₂₋ₓ general formula, where X has values from 0 to 1, with a high oxygen deficiency and an O/Ti relation between 1.5 and 2.

5. A nanostructured titanium oxide material (TiO₂₋ₓ, where 0≤X ≤1), in agreement with clause 1, **characterized** because it is constituted by nanofibers and/or nanotubes with dimensions between 3 and 50 nm in diameter and lengths from 0.01 to 100µm.

6. A nanostructured titanium oxide material (TiO₂₋ₓ, where 0≤ X ≤1), in agreement with clause 1, **characterized** because it is constituted by nanofibers and/or mesoporous nanotubes with an homogeneous distribution of pores in an interval between 2 and 20 nm, as well as a specific area between 5 and 500 m²/g.

7. A nanostructured titanium oxide material (TiO_{2-X}, where 0< X ≤1), in agreement with clause 1, **characterized** because it has a stable specific area preferably between 100 and 400 m2/g.

8. A nanostructured titanium oxide material (TiO₂₋ₓ, where 0≤X ≤1), in agreement with clause 1, **characterized** because it has a nanotubular and /or nanofibrilar morphology constituted of 1 to 50 structural layers with an inter-layer spacing between 0.695 and 1.453 nm.

9. A nanostructured titanium oxide material (TiO₂₋ₓ, where 0≤X ≤1), in agreement with clause 1, **characterized** because it has a stable thermal nanotubular morphology at temperatures between 300 and 500 °C.

10. A nanostructured material of hydrogen titanate and/or mixed sodium and hydrogen titanate, **characterized** because it has the HTiO₂ general formula and/or NaₓH₁₋ₓTiO₂, where x varies from 0 to less than 1, the hydrogen and sodium atoms are found in the interlayer regions of the orthorhombic structure, and they present nanofibrilar and/or nanotubular morphology constituted of piled structural layers that are folded or rolled inwards themselves, or formed by overlapped semitubes.

11. A nanostructured material of hydrogen titanate and/or mixed sodium and hydrogen titanate, in agreement with clause 10, **characterized** because it has an isostructural orthorhombic structure whose unit cell is described by the spatial groups: *59 Pmmn,* 63 *Amma,* 71 *Immn* and 63 *Bmmb.*

12. A nanostructured material of hydrogen titanate and/or mixed sodium and hydrogen titanate, in agreement with clause 10, **characterized** because the cell parameters of the unit cell with orthorhombic symmetry are: ***a***= 0.29 to 0.32 nm, ***b***= 0.35 to 0.43 nm, and ***c***= 0.882 to 1.885 nm and α=β=γ=90°, depending on the synthesis conditions.

13. A nanostructured material of hydrogen titanate and/or mixed sodium and hydrogen titanate, in agreement with clause 10, **characterized** because it presents a disordered mesoporosity with an average pore diameter between 2 and 15 nm and a specific area between 100 and 600 m²/g.

14. A nanostructured material of hydrogen titanate and/or mixed sodium and hydrogen titanate, in agreement with clause 10, **characterized** because it presents a nanofibrilar and/or a nanotubular morphology with dimensions of 3 to 50 nm in diameter and lengths from 0.1 to 100µm.

15. A nanostructured material of hydrogen titanate and/or mixed sodium and hydrogen titanate, in agreement with clause 10, **characterized** because it has a nanotubular morphology constituted by 1 to 50 structural layers with an inter-layer spacing between 0.882 and 1.885 nm.

16. A procedure for the synthesis of the titanium oxide with orthorhombic nanostructure of TiO₂₋ₓ JT phase, where 0≤ x ≤1, **characterized** because it consists of an initial stage in which a hydrogen titanate and/or a mixed sodium and hydrogen titanate is obtained, starting from a titanium compound, and of a later stage in which the titanate product is submitted to a thermal treatment, to produce a stable nanostructured material.

17. A procedure for the synthesis of the titanium oxide with orthorhombic nanostructure of TiO₂₋ₓ JT phase, where 0< x ≤1, in agreement with clause 16, where the titanium oxide compound is mixed with an alkaline solution, **characterized** because it is submitted to a synthesis stage under hydrothermal conditions in a closed system or under thermal conditions at atmospheric pressure in reflux conditions, followed by an ionic exchange treatment.

18. A procedure for the synthesis of the titanium oxide with orthorhombic nanostructure of TiO₂₋ₓ JT phase, where 0≤ x ≤1, in agreement with clause 16, **characterized** because when performing the synthesis under the following operational conditions: a) hydrothermal treatment in closed system at autogenous pressure from 1 to 150 atm, temperatures from 50 to 300 °C and reaction times from 1 to 80 h or b) thermal treatment at atmospheric pressure in reflux conditions, temperatures from 50 to 150 °C and reaction times from 1 to 80 hours, nanostructures are obtained with orthorhombic symmetry and unit cell parameters with values of *a* from 0,29 to 0.32 nm, with values of ***b*** from 0.35 to 0.43 nm, and with values of ***c*** from 0.882 to 1,885 nm and α=β=γ=90°.

19. A procedure for the synthesis of the titanium oxide with orthorhombic nanostructure of TiO₂₋ₓ JT phase, where 0≤ x ≤1, in agreement with clause 16, **characterized** because the thermal treatment stage in an oxidizing or inert atmosphere is carried out at temperatures between 300 and 700°C.

20. A procedure for the synthesis of the titanium oxide with orthorhombic nanostructure of TiO₂₋ₓ JT phase, where 0≤x ≤1, in agreement with clause 16, **characterized** because the thermal treatment stage is preferably performed in an air oxidizing atmosphere or in a nitrogen inert atmosphere.
